# EUROPEAN PATENT SPECIFICATION

(11) **EP 1 854 908 B1**
(45) Date of publication and mention of the grant of the patent: **10.04.2013**
(21) Application number: 06713375.1
(22) Date of filing: 09.02.2006
(51) Int. Cl.: C23C 26/00, A47B 77/06, A47B 96/18, A47K 1/04, A47K 3/02, A47K 4/00, A47K 13/00, E03C 1/18, E03C 1/20, E03D 11/02, E03D 13/00, B05D 7/00

(54) **METHOD FOR MANUFACTURING WATER-USING HOME FACILITY OR EQUIPMENT, AND WATER-USING HOME FACILITY OR EQUIPMENT**
VERFAHREN ZUR HERSTELLUNG EINER WASSER VERBRAUCHENDEN HAUSHALTSVORRICHTUNG ODER -EINRICHTUNG UND WASSER VERBRAUCHENDE HAUSHALTSVORRICHTUNG ODER -EINRICHTUNG
PROCÉDÉ DE FABRICATION D UNE INSTALLATION OU D' UN ÉQUIPEMENT PRIVÉ HYDRAULIQUE, ET INSTALLATION OU ÉQUIPEMENT PRIVÉ HYDRAULIQUE

(30) Priority: 03.03.2005 JP 2005059002; 13.09.2005 JP 2005265228
(43) Date of publication of application: 14.11.2007
(73) Proprietor: Cleanup Corporation, Tokyo 1168587 (JP); SUMITOMO OSAKA CEMENT CO., LTD., Tokyo 102-8465 (JP)
(72) Inventor: OBATA, Katsutoshi, Tokyo 1168587 (JP); WATANABE, Kazuyuki, Tokyo 1168587 (JP); KIDA, Yuichiro, Tokyo 1168587 (JP); ENDO, Sayuri, Tokyo 1168587 (JP); FUKADU, Masahiro, Tokyo, 1168587 (JP); SHIGERU, Keijiro, Tokyo 102-8465 (JP); MAEDA, Daisaku, Tokyo 102-8465 (JP)
(74) Representative: Cooper-Rolfe, Elizabeth Louise
(86) International application number: PCT/JP2006/302232
(87) International publication number: WO 2006/092941

(56) References cited:
- EP-A1- 1 136 527
- EP-A1- 1 489 146
- EP-A2- 0 736 504
- WO-A1-00/23528

## Description

### Technical Field

The present invention relates to a method for manufacturing household equipment using water and the household equipment using water, and in particular, to a coat forming method for the household equipment using water.

### Background Art

There are household equipment using water (may be referred to as water-using household equipment hereafter), such as a sink of a kitchen sink, a roof of a kitchen cabinet, a bowl and a mirror of a wash stand, a toilet seat and a stool of a toilet, a bathtub, a pan, wall surfaces or a ceiling plane of a bathroom. The water-using household equipment are made of stainless steel or resin. However, they are easily stained because they contact water and drops of water stick to them.

For the purpose of improving the deficiency, there are disclosed methods (Patent Documents 1 and 2), for instance, of forming a hydrophilic coat by applying a copolymer of a substance composed of a chemical formula LiₐNa_{b}K_{c}(SiOₙ)ₓZrOₐ)_{y}(H₂O)_{z} and polyacrylic or acrylic monomer to a stainless base and baking it at a high temperature.

According to such methods, sticking oil stains can be easily removed, dotted spots of evaporated water do not appear, fingerprints are not noticeable, and flaws are hardly made.

There is also a disclosed method (Patent Document 3) of forming a coat including SiO₂ on the surface of a substrate and further applying an aqueous solution including lithium ion on the coat and then heating it so as to diffuse and distribute the lithium ion in the coat and on the surface of the substrate.

According to the method, particularly, good hydrophilicity (hydration: wettability to water) can be obtained by the lithium ion.

Patent Document 1: Japanese Patent Laid-Open No. 2003-310411

Patent Document 2: Japanese Patent Laid-Open No. 2003-301273

Patent Document 3: Japanese Patent Laid-Open No. 2002-19007

However, neither of the conventional techniques have sufficiently solved the problem of fouling in conjunction with generation of drops of water due to insufficient hydrophilicity, problems such as occurrence of flaws due to insufficient surface hardness, the problem of the hydrophilic coat becoming white when placed under a water vapor atmosphere in a hydrophilic-coat formed state, and the problem of a part of the hydrophilic coat becoming white when the part contacts a hot kettle or a hot pan. Thus, the techniques have required improvements in order to be adopted for the water-using household equipment. In this specification, phenomena of defective appearances are collectively referred to as "whitening" of the hydrophilic coat.

The present invention has been made in view of the problems, and an object thereof is to provide a method for manufacturing water-using household equipment of which hydrophilicity, surface hardness and appearances are good and the water-using household equipment.

### Disclosure of the Invention

The present invention provides a method for manufacturing water-using household equipment (claim1), characterized by comprising:
a surface treatment step of treating at least a surface of a substrate contacting water or contacting a water vapor atmosphere with a coating agent including silicic acid and forming a surface treatment layer; and
an application step of forming an application layer on the surface treatment layer by applying an aqueous solution including 1 to 20 mass portions of Si by SiO₂ conversion, 0.05 to 0.3 mass portion of Li by Li₂O conversion and 0.5 to 1 mass portion of Na by Na₂O conversion.

The present invention also provides the method for manufacturing water-using household equipment, characterized by further comprising:
a heating step of performing heat processing at a temperature of 200°C or more.

The present invention provides a method for manufacturing water-using household equipment, characterised in that:
the water-using household equipment is a sink of a kitchen sink, a roof of a kitchen cabinet, a bowl or a mirror of a wash stand, a toilet seat or a stool of a toiler, or a bathtub, a pan, wall surfaces or a ceiling plane of a bathroom.

The present invention provides water-using household equipment, characterized by including a coat including silicic acid, and a coat constituted by composition of 44 to 97% by mass of Si by SiO₂ conversion, 0.2 to 17% by mass of Li by Li₂O conversion and 2.4 to 49% by mass of Na by Na₂O conversion on the coat including the silicic acid on a surface of a substrate.

The present invention provides water-using household equipment (claim 5), characterized by including a surface treatment layer treated by a coating agent including silicic acid on a surface of a substrate, and an application layer having an alkaline aqueous solution applied thereto on the surface treatment layer, the solution including 1 to 20 mass portions of Si by SiO₂ conversion, 0.05 to 0.3 mass portion of Li by Li₂O conversion and 0.5 to 1 mass portion of Na by Na₂O conversion.

The present invention provides water-using household equipment, characterized in that the water-using household equipment is a sink of a kitchen sink, a roof of a kitchen cabinet, a bowl or a mirror of a wash stand, a toiletseat or a stool of a toilet, or a bathtub, a pan, wall surfaces or a ceiling plane of a bathroom.

According to the method for manufacturing water-using household equipment and the water-using household equipment of the present invention, the water-using household equipment has the surface treatment layer or the coat including the silicic acid on the surface of the substrate and the application layer or the coat constituted by a specific composition of the three components of Si, Li and Na on the surface treatment layer or the coat including the silicic acid. Therefore, its hydrophilicity, surface hardness and appearances are good.

### Best Mode for Carrying Cut the Invention

A description will be given below as to a method for manufacturing water-using household equipment and the water-using household equipment according to the present invention.

The present invention provides a method for manufacturing water-using household equipment, comprising:
a surface treatment step of treating at least a surface of a substrate contacting water or contacting a water vapor atmosphere with a coating agent including silicic acid and forming a surface treatment layer; and
an application step of forming an application layer on the surface treatment layer by applying an aqueous solution including 1 to 20 mass portions of Si by SiO₂ conversion, 0.05 to 0.3 mass portion of Li by Li₂O conversion and 0.5 to 1 mass portion of Na by Na₂O conversion.

Here, the aqueous solution is a water paint, so to speak, and indicates alkalinity by including the three components of Si and the like in water as a solvent. In other words, it is an alkaline aqueous solution.

The ratio of the water as the rest of the three components of Si and the like is not especially limited unless the aqueous solution drips when applied or becomes unevenly applied. It is desirable, however, to limit it within the range of 50 to 150 mass portions or further within the range of 80 to 100 mass portions.

From the above viewpoint, the present invention also provides a method for manufacturing water-using household equipment, preferably comprising:
a surface treatment step of treating at least a surface of a substrate contacting water or contacting a water vapor atmosphere with a coating agent including silicic acid and forming a surface treatment layer; and
an application step of forming an application layer on the surface treatment layer by applying an alkaline aqueous solution including 1 to 20% by mass of Si by SiO₂ conversion, 0.05 to 0.3% by mass of Li by Li₂O conversion and 0.5 to 1% by mass of Na by Na₂O conversion so as to form a coat on the surface of the substrate.

As for the method for manufacturingwater-using household equipment according to the present invention, the material of the substrate is not especially limited. It is possible to suitably use metallic material such as stainless steel, an inorganic inorganic material or a resin material such as glass, enamel or synthetic ceramics. It desirable, however, that the material be sufficiently heat-resisting to withstand the heat processing. The substrate is formed in a shape required as the water-using household equipment.

The coat composed of the surface treatment layer and the application layer formed on the surface treatment layer may be formed on the entire surface of a molded substrate. It is sufficient, however, to form the coat at least on the surface contacting the water or the water vapor atmosphere.

The silicic acid included in the coating agent in the surface treatment step is broadly defined to include one of orthosilicic acid and its condensed acid, and silicon dioxide (SiO₂) and its hydrate.

The coating agent including the silicic acid may contain inorganic components such as ZrO₂, TiO₂, Al₂O₃, E₂O₃, CaO, ZnO, MgO, Na₂O and K₂O as accessory components. It may also contain colloidal silica and ethyl silicate heretofore known as inorganic binders.

The surface treatment is broadly defined to include plating, coating, lining, enamel processing and the like. Therefore, if the substrate is made of enamel, the surface treatment step is substantially emitted.

The warer-using household equipment can be used in a dry state after the application step. However, it should preferably undergo a heating step of performing heat processing at a temperature of 200°C or more. The heat processing includes so-called baking. However, it is not limited thereto.

As for the water-using household equipment obtained by the manufacturing method, surface hardness of the formed cost should desirably be 9H or more.

The water-using household equipment should desirably be a sink of a kitchen sink, a roof of a kitchen cabinet, a bowl or a mirror of a wash stand, a toilet seat or a stool of a toilet, or a bathtub, a pan, wall surfaces or a ceiling plane of a bathroom which is used in a place contacting water or contacting water vapor atmosphere.

The surface treatment layer having its surface treated by the coating agent including the silicic acid normally has a chemical binding represented by Si - O - X. Here, X denotes an atom, an atom group, a molecule, or a molecule group which is chemically bound to an oxygen atom O. In the case where X is a hydrogen atom H, it becomes - Si - OH, where an OH group shows hydrophilicity due to its property of being easily stuck to by water.

If the surface treatment layer having its surface treated by the coating agent including the silicic acid is treated by the alkaline aqueous solution to form a coated film, a Si - O - H bond is cut in the portion of O - H and H is replaced by R so as to generate Si - OR (R is an alkaline atom). As R replaces water and generates the OH group, it shows hydrophilicity.

If the alkaline aqueous solution is alkaline silicate containing an appropriate amount of Si, the hydrophilicity is further improved. This is conceivably not only because the alkaline silicate has an alkaline property but also because the alkaline silicate itself has a Si - OR bond and is firmly fixed to the surface treatment layer by drying so as not to easily disappear.

If the alkaline aqueous solution contains an appropriate amount of Na, it exerts action of cutting a Si - O bond and contributes to improvement in the hydrophilicity and mirror hardness.

If the alkaline aqueous solution contains an appropriate amount of Li, it alleviates the action of Na.

As previously described, the present invention preferably uses the alkaline aqueous solution of a coat film material, which includes 1 to 20% by mass of Si by SiO₂ conversion, 0.05 to 0.3% by mass of Li by Li₂O conversion and 0.5 to 1.0% by mass of Na by Na₂O conversion.

If Si exceeds 20% by mass bySiO₂ conversion, the surface is apt to appear rough. If Si is less than 1% by mass, the hydrophilic coat is apt to disappear. If Li exceeds 0.3% by mass by Li₂O conversion, the surface hardness lowers. If Li is less than 0.05% by mass, whitening may occur. If Na exceeds 1.0% by mass by Na₂O conversion,whitening occurs. If Na is less than 0.5% by mass, there is a possibility that sufficient hydrophilicity and surface hardness may not be obtained.

Next, the present invention provides water-using household equipment preferably obtained by the method for manufacturing water-using household equipment according to the present invention, including a coat including silicic acid, and a coat constituted by composition of 44 to 97% by mass of Si by SiO₂ conversion, 0.2 to 17% by mass of Li by Li₂O conversion and 2.4 to 49% by mass of Na by Na₂O conversion on the coat including the silicic acid on a surface of a substrate.

The present invention provides water-using household equipment including a surface treatment layer treated by a coating agent including silicic acid on a surface of a substrate, and an application layer having an alkaline aqueous solution applied thereto on the surface treatment layer, the solution including 1 to 20 mass portions of Si by SiO₂ conversion, 0.05 to 0.3 mass portion of Li by Li₂O conversion and 0.5 to 1 mass portion of Na by Na₂O conversion. The application layer becomes the coat constituted by the composition after the contained water is evaporated by drying.

The present invention provides water-using household equipment, wherein the water-using household equipment is a sink of a kitchen sink, a roof of a kitchen cabinet, a bowl or a mirror of a wash stand, a toilet seat or a stool of a toilet, or a bathtub, a pan, wall surfaces or a ceiling plane of a bathroom.

The water-using household equipment according the present invention can have the effects of the above method for manufacturing water-using household equipment according to the present invention. As described in the method for manufacturing water-using household equipment according to the present invention, the coat may be formed on the entire surface of a molded substrate. It is sufficient, however, to form the coat at least on the surface contacting the water or the water vapor atmosphere.

### Examples

The present invention will be further described by taking examples. The present invention is not limited to the examples described below.

### (First Example)

A sink made of enamel was used as the water-using household equipment. As the silicic acid is already included in the surface of the sink made of enamel, it is not necessary to further perform the surface treatment with the coating agent including the silicic acid.

An alkaline aqueous solution was prepared, which includes 0.8% by mass of Na by Na₂O conversion, 0.15% by mass of Li by Li₂O conversion and 4.5% by mass of Si by SiO₂ conversion. In other words, the composition of the alkaline aqueous solution includes 0.8 mass portion of Na by Na₂O conversion, 0.15 mass portion of Li by Li₂O conversion and 4.5 mass portions of Si by SiO₂ conversion, and also includes 94.55 mass portions of water as its remaining component.

The alkaline aqueous solution prepared as above was directly applied to the sink made of enamel or sprayed onto its entire surface by using a spray. Each of the components Ka (Na₂O conversion), Li (Li₂O conversion) and Si (SiO₂ conversion) was measured in compliance with JIS K 0400-52-30 (water quality - inductively-coupled plasma emission spectrometry). This also applies to the other examples below. Application quantity is 20 g of the alkaline aqueous solution per area of 1 m². After the application, baking was performed at 250°C for 20 minutes after air drying, and then cooling was performed so as to form a hydrophilic coat. As the water of the solvent evaporates, the hydrophilic coat has the composition of 15% by mass of by Na₂O conversion, 3% by mass of Li by Li₂O conversion and 82% by mass of Si by SiO₂ conversion.

A contact angle measured as to the formed hydrophilic coat was 10°, which was smaller than the contact angle 20° of the sink's surface before forming the hydrophilic coat. Thus, improvement in the hydrophilicity was noted.

### (Second Example)

A sink made of stainless steel was used as the substrate of the water-using household equipment. The surface of the stainless steel underwent a pretreatment such as a degreasing treatment and was dried.

A hydrolytic liquid of ethyl silicate was used as the coating agent including the silicic acid, which was spray-coated on the surface of the stainless steel. Thereafter, baking was performed at 250° for 20 minutes so as to form the surface treatment layer.

Subsequently, the alkaline aqueous solution was prepared, which includes 1.0% by mass of Na by Na₂O conversion, 0.2% by mass of Li by Li₂O conversion and 5.0% by mass of Si by SiO₂ conversion. In other words, the composition of the alkaline aqueous solution includes 1.0 mass portion of Na by Na₂O conversion, 0.2 mass portion of Li by Li₂O conversion and 5.0 mass portions of Si by SiO₂ conversion, and also includes 93.8 mass portions of water as its remaining component.

The alkaline aqueous solution prepared as above was spray-coated on the surface of the stainless steel by 20 g of the alkaline aqueous solution per area of 1 m². Thereafter, baking was performed at 250°C for 20 minutes, and then cooling was performed so as to form the hydrophilic coat. As the water of the solvent evaporates, the hydrophilic coat has the composition of 16% by mass of Na by Na₂O conversion, 3% by mass of Li by Li₂O conversion and 81% by mass of Si by SiO₂ conversion.

The contact angle measured as to the formed hydrophilic coat was 5°, which was significantly smaller than the contact angle 30° of the surface of the stainless steel before forming the hydrophilic coat. Thus, significant improvement in the hydrophilicity was noted.

### (Third Example)

A number of the alkaline aqueous solutions described in the third example do not fall within the scope of the claims but are provided as comparative examples, as will be described in more detail below.

A test material made of stainless steel was used as the substrate, and the same pretreatment and drying as the second example were performed.

A hydrolytic liquid in which ethyl silicate and zirconium tetrabutoxide are mixed at a mass ratio of 1: 1 between Si and Zr was used as the coating agent including the silicic acid, which was spray-coated on the surface of the stainless steel. Thereafter, baking was performed at 250°C for 20 minutes so as to form the surface treatment layer.

Subsequently, as shown in Table 1, the alkaline aqueous solution was prepared, which includes 0 to 1.5% by mass of Na by Na₂O conversion, 0 to 0.5% by mass of Li by Li₂O conversion and 5.0% by mass of Si by SiO₂ conversion as constant amounts. In other words, the composition of the alkaline aqueous solution includes 0 to 1.5 mass portion of Na by Na₂O conversion, 0 to 0.5 mass portion of Li by Li₂O conversion and 5.0 mass portions of Si by SiO₂ conversion as the constant amounts, and also includes 93.0 to 95.0 mass portions of water as its remaining component.

The alkaline aqueous solution prepared as above was spray-coated on the surface of the stainless steel by 20 g of the alkaline aqueous solution per area of 1 m² of a surface treatment plane. Thereafter, baking was performed at 250°C for 20 minutes, and then cooling was performed so as to form the hydrophilic coat. As the water of the solvent evaporates, the hydrophilic coat has the composition of 0 to 23% by mass of Na by Na₂O conversion, 0 to 9% by mass of Li by Li₂O conversion and 71 to 100% by mass of Si by SiO₂ conversion.

Table 1 shows the results of measuring the hydrophilicity, appearance and surface hardness of the test material forming the hydrophilic coat.

Here, the hydrophilicity was evaluated as to the contact angle in compliance with JIS R 3257, where O indicates the contact angle of 20° or less and X indicates the contact angle exceeding 20°.

As for the appearance, visual evaluation was performed as to a surface state of the coat after performing the heat processing or heat and humidity processing respectively. The heat processing bakes the test material in a stage having formed the coated film before performing a baking process at 250°C for 20 minutes. In other words, the appearance of the test material having undergone the baking process in the manufacturing process is evaluated as-is. In the heat and humidity processing, boiling water is dripped on a coat surface of the test material having undergone the baking process and a hot pan filled with the boiling water is placed thereon for 20 minutes, where the appearance is evaluated under a condition even more demanding than the heat processing.

As for each of the test conditions, those having Na₂O at 0%-by-mass level (leftmost column in Table 1) out of those having X as the appearance appeared rough after heating. Those having Na₂O at 1.5%-by-mass level (rightmost column in Table 1) whitened in either case of the heat processing or the heat and humidity processing. And those having Li₂O at 0%-by-mass level (uppermost line and immediately following line in Table 1) all whitened in the heat and humidity processing including those which were good in the case of the heat processing.

The surface hardness was evaluated by pencil hardness in compliance with JIS K 5600-5-4, where O indicates those of which hardness is 9H or more and X indicates those of which hardness is below 9H.

**[Table 1]**

| | | Na20 | | | | | | | | | | | |
|---|---|---|---|---|---|---|---|---|---|---|---|---|---|
| | | 0% | | 0.20% | | 0.50% | | 0.70% | | 1% | | 1.50% | |
| Li20 | 0% | | | Contact | | Contact | | Contact | | Contact | | Contact | |
| | | | | angle | X | angle | ○ | angle | ○ | angle | ○ | angle | ○ |
| | | | | Appearance | X | Appearance | X | Appearance | X | Appearance | X | Appearance | X |
| | | | | Hardness | ○ | Hardness | ○ | Hardness | ○ | Hardness | ○ | Hardness | ○ |
| | 0.02% | Contact | | Contact | | Contact | | Contact | | Contact | | Contact | |
| | | angle | X | angle | X | angle | ○ | angle | ○ | angle | ○ | angle | ○ |
| | | Appearance | X | Appearance | X | Appearance | X | Appearance | X | Appearance | X | Appearance | X |
| | | Hardness | X | Hardness | ○ | Hardness | ○ | Hardness | ○ | Hardness | ○ | Hardness | ○ |
| | 0.05% | Contact | | Contact | | Contact | | Contact | | Contact | | Contact | |
| | | angle | X | angle | X | angle | ○ | angle | ○ | angle | ○ | angle | ○ |
| | | Appearance | X | Appearance | ○ | Appearance | ○ | Appearance | ○ | Appearance | ○ | Appearance | X |
| | | Hardness | X | Hardness | ○ | Hardness | ○ | Hardness | ○ | Hardness | ○ | Hardness | ○ |
| | 0.10% | Contact | | Contact | | Contact | | Contact | | Contact | | Contact | |
| | | angle | X | angle | X | angle | ○ | angle | ○ | angle | ○ | angle | ○ |
| | | Appearance | X | Appearance | ○ | Appearance | ○ | Appearance | ○ | Appearance | ○ | Appearance | X |
| | | Hardness | X | Hardness | ○ | Hardness | ○ | Hardness | ○ | Hardness | ○ | Hardness | ○ |
| | 0.30% | Contact | | Contact | | Contact | | Contact | | Contact | | Contact | |
| | | angle | X | angle | X | angle | ○ | angle | ○ | angle | ○ | angle | ○ |
| | | Appearance | X | Appearance | ○ | Appearance | ○ | Appearance | ○ | Appearance | ○ | Appearance | X |
| | | Hardness | X | Hardness | ○ | Hardness | ○ | Hardness | ○ | Hardness | ○ | Hardness | ○ |
| | 0.50% | Contact | | Contact | | Contact | | Contact | | Contact | | Contact | |
| | | angle | X | angle | X | angle | ○ | angle | ○ | angle | ○ | angle | ○ |
| | | Appearance | X | Appearance | ○ | Appearance | ○ | Appearance | ○ | Appearance | ○ | Appearance | X |
| | | Hardness | X | Hardness | X | Hardness | X | Hardness | X | Hardness | X | Hardness | X |

According to Table 1, it is understandable that, if the alkaline aqueous solution to be applied has a content of Na₂O of less than 0.5% (% by mass), the contact angle exceeds 20°, which is not desirable. It is also understandable that, if the hydrophilic coat has the content of Na₂O exceeding 1% (% by mass), appearance abnormality occurs, which is not desirable. It is further understandable that, if the hydrophilic coat has the content of Li₂O exceeding 0.3% (% by mass), its hardness is less than 9H pencil hardness, which is practically unusable. And if the hydrophilic coat has the content of Li₂O less than 0.05% (% by mass), the appearance abnormality occurs, which is not desirable.

Accordingly, the aqueous solution used by the invention comprises 0.05 to 0.3 % by mass of Li by Li₂O conversion and 0.5 to 1% by mass of Na by Na₂O conversion (as highlighted in Table 1).

## Claims

1. A method for manufacturing a household facility or device with which water is used, **characterized by** the steps of:
carrying out a surface treatment step of treating at least a surface of a substrate contacting water or contacting a water vapor atmosphere with a coating agent including silicic acid and forming a surface treatment layer; and
following the surface treatment step, carrying out an application step of forming an application layer on the surface treatment layer by applying an aqueous solution including 1 to 20 % by mass of Si by SiO₂ conversion, 0.05 to 0.3 % by mass of Li by Li₂O conversion and 0.5 to 1% by mass of Na by Na₂O conversion.

2. A method as claimed in claim 1, wherein
the aqueous solution is an alkaline aqueous solution.

3. The method according to claim 1 or 2, **characterized by** the step of:
performing heat processing at a temperature of 200°C or more.

4. The method according to any of claims 1 to 3, **characterized in that**:
the household facility or device with which water is used is a sink of a kitchen sink, a roof of a kitchen cabinet, a bowl or a mirror of a wash stand, a toilet seat or a stool of a toilet, or a bathtub, a pan, wall surfaces or a ceiling plane of a bathroom.

5. Household facility or device with which water is used, **characterized by** including a coat including silicic acid, and a coat constituted by composition of 44 to 97% by mass of Si by SiO₂ conversion, 0.2 to 17% by mass of Li by Li₂O conversion and 2.4 to 49% by mass of Na by Na₂O conversion on the coat including the silicic acid on a surface of a substrate.

6. The household facility or device with which water is used according to claim 5, **characterized in that** the household facility or device with which water is used is a sink of a kitchen sink, a roof of a kitchen cabinet, a bowl or a mirror of a wash stand, a toilet seat or a stool of a toilet, or a bathtub, a pan, wall surfaces or a ceiling plane of a bathroom.

## Patentansprüche

1. Verfahren zum Herstellen einer Haushaltsanlage oder Vorrichtung, die zusammen mit Wasser verwendet wird, **gekennzeichnet durch** die Schritte:
das Ausführen eines Oberflächenbehandlungsschritts, bei dem zumindest eine Oberfläche eines Substrats, das mit Wasser in Berührung kommt oder mit einer Wasserdampfatmosphäre, mit einem Beschichtungsmittel behandelt wird, das Kieselsäure enthält, und das Ausbilden einer Oberflächenbehandlungsschicht; und
nach dem Oberflächenbehandlungsschritt, das Ausführen eines Anwendungsschritts, bei dem eine Anwendungsschicht auf der Oberflächenbehandlungsschicht ausgebildet wird, und zwar **durch** das Anwendung einer wässrigen Lösung, die 1 bis 20 Massenprozent Si **durch** SiO₂-Umwandlung, 0,05 bis 0,3 Massenprozent Li **durch** LiO₂-Umwandlung und 0,5 bis 1 Massenprozent Na **durch** NaO₂-Umwandlung enthält.

2. Verfahren nach Anspruch 1, wobei die wässrige Lösung eine alkalische wässrige Lösung ist.

3. Verfahren nach Anspruch 1 oder 2, **gekennzeichnet durch** den Schritt:
das Ausführen einer Wärmebehandlung bei einer Temperatur von 200°C oder mehr.

4. Verfahren nach irgendeinem der Ansprüche 1 bis 3, **dadurch gekennzeichnet, dass**:
die Haushaltsanlage oder Vorrichtung, die zusammen mit Wasser verwendet wird, das Becken eines Küchenausgusses ist, die Oberseite eines Küchenschranks, das Becken oder der Spiegel eines Waschbeckens, ein Toilettensitz oder Becken, eine Badewanne, eine Pfanne und die Wandoberflächen oder die Deckenfläche eines Badezimmers.

5. Haushaltsanlage oder Vorrichtung, die zusammen mit Wasser verwendet wird, **dadurch gekennzeichnet, dass** sie eine Schicht umfasst, die Kieselsäure enthält, und eine Beschichtung gebildet wird durch eine Zusammensetzung von 44 bis 97 Massenprozent Si durch SiO₂-Umwandlung, 0,2 bis 17 Massenprozent Li durch LiO₂-Umwandlung und 2,4 bis 49 Massenprozent Na durch NaO₂-Umwandlung auf der Schicht, die die Kieselsäure enthält, auf einer Oberfläche eines Substrats.

6. Haushaltsanlage oder Vorrichtung nach Anspruch 5, die zusammen mit Wasser verwendet wird, **dadurch gekennzeichnet, dass** die Haushaltsanlage oder Vorrichtung, die zusammen mit Wasser verwendet wird, das Becken eines Küchenausgusses ist, die Oberseite eines Küchenschranks, das Becken oder der Spiegel eines Waschbeckens, ein Toilettensitz oder Becken, eine Badewanne, eine Pfanne und die Wandoberflächen oder die Deckenfläche eines Badezimmers.

## Revendications

1. Procédé de fabrication d'une installation ou d'un dispositif domestique avec lequel de l'eau est utilisée, **caractérisé par** les étapes de :
exécuter une étape de traitement de surface consistant à traiter au moins une surface d'un substrat venant en contact avec l'eau ou venant en contact avec une atmosphère de vapeur d'eau avec un agent de revêtement incluant l'acide silicique et formant une couche de traitement de surface ; et
à la suite de l'étape de traitement de surface, exécuter une étape d'application consistant à former une couche d'application sur la couche de traitement de surface en appliquant une solution aqueuse incluant 1 à 20 % en masse de conversion de Si par SiO₂, de 0,05 à 0,3 % en masse de conversion de Li par Li₂0 et de 0,5 à 1 % en masse de conversion de Na par Na₂0.

2. Procédé selon la revendication 1, dans lequel la solution aqueuse est une solution aqueuse alcaline.

3. Procédé selon la revendication 1 ou 2, **caractérisé par** l'étape de :
exécuter un traitement thermique à une température de 200 °C ou plus.

4. Procédé selon l'une quelconque des revendications 1 à 3, **caractérisé en ce que** :
l'installation ou dispositif domestique avec lequel de l'eau est utilisée est un évier d'un évier de cuisine, un dessus d'une armoire de cuisine, une cuvette ou un miroir d'un lavabo, un siège de toilette ou un tabouret de toilette, ou une baignoire, une cuvette, des surfaces de paroi ou un plan de plafond d'une salle de bains.

5. Installation ou dispositif domestique avec lequel de l'eau est utilisée, caractérisée en incluant un revêtement incluant un acide silicique, et un revêtement constitué par la composition de 44 à 97 % en masse de conversion de Si par SiO₂, de 0,2 à 17% en masse de conversion de Li par Li₂O et de 2,4 à 49% en masse de conversion de Na par Na₂O sur le revêtement incluant l'acide silicique sur une surface d'un substrat.

6. Installation ou dispositif domestique avec laquelle de l'eau est utilisée selon la revendication 5, **caractérisée en ce que** l'installation ou le dispositif avec lequel de l'eau est utilisée est un évier d'un évier de cuisine, un dessus d'une armoire de cuisine, une cuvette ou un miroir d'un lavabo, un siège de toilette ou un tabouret de toilette, ou une baignoire, une cuvette, des surfaces de paroi ou un plan de plafond d'une salle de bains.
